# EUROPÄISCHE PATENTANMELDUNG

(11) **EP 4 803 873 A1**
(43) Veröffentlichungstag der Anmeldung: **09.09.2026**
(21) Anmeldenummer: 26159771.0
(22) Anmeldetag: 20.02.2026
(51) Int. Cl.: G01M 3/02, G01N 3/12

(54) **SPANNKOPF MIT HYDRAULISCHEM KRAFTVERSTÄRKER**

(30) Priorität: 03.03.2025 DE 102025107983
(71) Anmelder: Uniflex-Hydraulik GmbH, 61184 Karben (DE)
(72) Erfinder: Döring, Hendrik, 61184 Karben (DE)
(74) Vertreter: Grättinger Möhring von Poschinger Patentanwälte Partnerschaft mbB

(57) **Zusammenfassung**

Die vorliegende Erfindung betrifft einen Prüfstand mit einer Schnellspanneinheit (3) zur Druckprüfung einer Leitung (8). Die Schnellspanneinheit (3) umfasst eine Anschlussaufnahme (11) und einen Schnellspannkopf (12), zwischen denen ein Anschluss (10) der zu prüfenden Leitung (8) einspannbar ist. Der Schnellspannkopf (12) weist einen Grundkörper (13), einen gegenüber dem Grundkörper (13) bewegbaren Prüfadapter (19) und einen hydraulischen Kraftwandler (28) auf. Der hydraulische Kraftwandler umfasst (28) eine Antriebseinrichtung (22), einen Eingangskolben (21) und einen auf den Prüfadapter (19) einwirkenden Ausgangskolben (20). Der Eingangskolben (21) und der Ausgangskolben (20) sind jeweils axial beweglich entlang ihrer Kolbenachse (20A, 21A) im Grundkörper (13) geführt und kommunizieren mittels eines Hydraulikfluids (23) hydraulisch miteinander. Durch Betätigung der Antriebseinrichtung (22) bewegt sich der Eingangskolben (21) axial gegenüber dem Grundkörper (13), was mittels des Hydraulikfluids (23) eine axiale Bewegung des Ausgangskolbens (20) sowie des Prüfadapters (19) bewirkt.

## Beschreibung

Die vorliegende Erfindung betrifft einen Prüfstand mit einer Schnellspanneinheit zur Druckprüfung einer Leitung, insbesondere einer Hydraulikleitung.

Derartige Prüfstände für druckbeaufschlagte (Hydraulik-)Leitungen spielen eine zentrale Rolle bei der Qualitätsprüfung von (Hydraulik)Leitungen und dienen dazu, die Zuverlässigkeit und Sicherheit der Leitungen unter realistischen Betriebsbedingungen zu prüfen.

Hierzu werden typischerweise Belastungstests unter hohem Druck, variierenden Temperaturen und/oder pulsierenden Belastungen durchgeführt, um sicherzustellen, dass die Leitungen den Anforderungen in sicherheitskritischen Anwendungen, beispielsweise in der Luftfahrt, dem Maschinenbau oder der Fahrzeugindustrie, standhalten.

Insbesondere wenn viele Leitungen in kurzer Zeit zu prüfen sind, spielt die einfache Handhabung und der schnelle Wechsel der zu prüfenden Leitungen eine wesentliche Rolle, da langwierige und komplizierte Rüstprozesse zu Fehlern und erhöhten Kosten führen können.

Vor diesem Hintergrund kommen häufig Schnellspannsysteme zum Einsatz, um die zu prüfende Leitung über ihre Anschlüsse während der Prüfung mit dem Prüfstand zu verbinden.

Ein Schnellspannsystem zeichnet sich dabei dadurch aus, dass es den oder die Anschlüsse der zu prüfenden Leitung mechanisch am Prüfstand fixiert und gleichzeitig eine schnelle, einfache und sichere Handhabung ermöglicht. Dabei erfolgt die Befestigung (Fixierung) typischerweise werkzeuglos mittels Hebelmechanismen, Klemmbacken oder Spindeltriebe, pneumatischer oder hydraulischer Aktuatoren oder vergleichbarer Spannvorrichtungen, die an einem Anschluss der (Hydraulik-)Leitung angreifen.

Aus dem reichen Fundus des bekannten Standes der Technik sei beispielhaft auf die CN 221485006 U sowie die CN 214503182 U verwiesen. Beide Veröffentlichungen zeigen einen Prüfstand mit einer Schnellspannvorrichtung zur Druckprüfung einer Hydraulikleitung. Bei der CN 221485006 U wird die Schnellspannvorrichtung dabei mittels eines Spindelmechanismus an einem Anschluss der Hydraulikleitung fixiert, bei der CN 214503182 U mittels eines hydraulischen Aktuators.

Die chinesischen Gebrauchsmuster CN 2 18 470 406 U und CN 2 13 90 31 46 U beschreiben jeweils einen Prüfstand zur Druckprüfung einer Leitung, bei der die Armaturen der Leitung mittels hydraulischer Zylinder eingespannt werden können.

Das US-Patent US5155997 zeigt einen hydraulischen Kraftwandler. In der deutschen Patentanmeldung DE 10 2021 104 601 A1 wird ein Linearaktuator beschrieben, der bei dem ein über einen Gewindetrieb linear verfahrbarer Kolben ein Hydraulikfluid verdrängt, um auf diese Weise eine Linearbewegung zu realisieren.

Der vorliegenden Erfindung liegt vor diesem Hintergrund die Aufgabe zugrunde, einen Prüfstand mit einer Schnellspanneinheit bereitzustellen, der sich durch verbesserte Praxistauglichkeit auszeichnet, insbesondere im Hinblick auf die einfache Handhabung und den schnellen Wechsel von zu prüfenden Leitungen sowie eine hohe Zuverlässigkeit und Sicherheit.

Gelöst wird diese Aufgabe durch den Prüfstand mit einer Schnellspanneinheit gemäß Anspruch 1. Bevorzugte Ausführungsformen sind in den Unteransprüchen angegeben.

Der erfindungsgemäße Prüfstand mit einer Schnellspanneinheit zur Druckprüfung einer Leitung, insbesondere einer Hydraulikleitung, zeichnet sich dadurch aus, dass
- die Schnellspanneinheit eine Anschlussaufnahme und einen Schnellspannkopf umfasst, zwischen denen ein Anschluss der zu prüfenden Leitung einspannbar ist,
- der Schnellspannkopf einen Grundkörper, einen gegenüber dem Grundkörper bewegbaren Prüfadapter und einen hydraulischen Kraftwandler aufweist,
- der hydraulische Kraftwandler eine Antriebseinrichtung, einen Eingangskolben und einen auf den Prüfadapter einwirkenden Ausgangskolben umfasst,
- der Eingangskolben und der Ausgangskolben jeweils axial beweglich (entlang ihrer Kolbenachse) im Grundkörper geführt sind und mittels eines Hydraulikfluids hydraulisch miteinander kommunizieren, und
- sich durch Betätigung der Antriebseinrichtung der Eingangskolben axial gegenüber dem Grundkörper bewegt, was mittels des Hydraulikfluids eine axiale Bewegung des Ausgangskolbens sowie des Prüfadapters bewirkt.

Durch das synergetische Zusammenspiel der erfindungsgemäßen Merkmale kann ein Prüfstand realisiert werden, bei dem die zu prüfende Leitung einfach, schnell, zuverlässig und sicher eingebaut, geprüft und wieder ausgebaut werden kann.

Die Erfindung ermöglicht es, dass ein zwischen der Anschlussaufnahme und dem Prüfadapter des Schnellspannkopfs angeordneter Anschluss einer zu prüfenden Leitung durch Betätigung der Antriebseinrichtung eingespannt und dicht mit dem Prüfadapter verschlossen werden kann, um die Leitung anschließend mit einem Prüffluid zu befüllen und zu prüfen.

Das Einspannen kann auf diese Weise schnell und einfach, lediglich durch Einsatz manueller Kraft erfolgen, was nicht nur kurze Rüst- bzw. Montagezeiten ermöglicht, sondern auch der Arbeitssicherheit und der Zuverlässigkeit des Prüfstands zu Gute kommt.

Der hydraulische Kraftwandler, dessen Eingangskolben einen kleineren Kolbenquerschnitt aufweist als der Ausgangskolben, ist dabei eine Schlüsselkomponente, die es ermöglicht, dass der Anschluss der Leitung durch den Ausgangskolben mit einer relativ großen Klemmkraft (Ausgangskraft) zwischen der Anschlussaufnahme und dem Schnellspannkopf verspannt wird, während hierfür nur eine relativ geringe Betätigungskraft (Eingangskraft) auf den Eingangskolben aufgebracht werden muss.

Die auf den Eingangskolben wirkende Betätigungskraft wird dabei durch Betätigung der Antriebseinrichtung ausgeübt. Die Antriebseinrichtung kann manuell oder maschinell betätigbar sein und dabei insbesondere mittels eines Hebelmechanismus oder eines Spindelmechanismus auf den Eingangskolben einwirken. Die Antriebseinrichtung ist somit dazu eingerichtet, den Eingangskolben entlang seiner Kolbenachse zu bewegen.

Nachfolgend werden einige Begriffe und Merkmale, die zur Beschreibung der Erfindung verwendet werden, näher definiert und erläutert:
Eine Leitung umfasst typischerweise einen Schlauch oder ein Rohr und zwei an den Enden des Schlauchs bzw. Rohrs angebrachte Anschlüsse.

Die Anschlüsse sind dabei oftmals mittels einer Radialpresse mit dem Schlauch bzw. dem Rohr verpresst. Die Anschlüsse weisen hierzu jeweils einen Anschlussnippel und eine Presshülse auf. Der Anschlussnippel wird teilweise in den Schlauch bzw. das Rohr eingeschoben, die Presshülse umschließt den Schlauch bzw. das Rohr im Bereich des eingeschobenen Anschlussnippels von außen. Wird nun durch eine Radialpresse der Durchmesser der Presshülse radial verkleinert, so wird der Schlauch bzw. das Rohr zwischen der Presshülse und dem Anschlussnippel verklemmt und somit dicht mit dem Anschluss verbunden. Die Leitung kann insbesondere als Hydraulikleitung, Pneumatikleitung oder Gasleitung ausgeführt sein.

Die Anschlussaufnahme umfasst beispielsweise eine Platte mit einer zwischen zwei gegenüberliegenden Klauenflanken angeordneten schlitzförmigen Ausnehmung, in die der Anschluss der zu prüfenden Leitung eingefädelt werden kann. Die lichte Weite der Ausnehmung (also der Abstand der beiden Klauenflanken) ist dabei so auf den Anschluss abgestimmt, dass sich der Anschluss mit einem Flanschabschnitt (zumindest in einer Richtung) gegen die Anschlussaufnahme abstützt und somit gegen die Anschlussaufnahme gepresst werden kann. Die Anschlussaufnahme kann symmetrisch zur zu prüfenden Leitung abgestützt sein, um aufzunehmende Kräfte beidseitig symmetrisch abzuleiten. Auf diese Weise kann verhindert werden, dass sich die Anschlussaufnahme beim Anpressen gegenüber der Kolbenachse des Ausgangskolbens verdreht, was zu unerwünschten Undichtigkeiten zwischen dem Prüfadapter und dem Anschluss führen kann. Alternativ oder zusätzlich kann der Prüfadapter mittels eines Kugelgelenks am Ausgangskolben befestigt sein, um ein Klaffen von Undichtigkeiten zwischen dem Prüfadapter und dem Anschluss zu verhindern, wenn sich die Anschlussaufnahme beim Anpressen verdreht bzw. verbiegt.

Der Eingangskolben und der Ausgangskolben bewegen sich jeweils in einem mit dem Hydraulikfluid befüllten Zylinderraum. Dringt einer der Kolben weiter in den jeweiligen Zylinderraum ein, wird dadurch das entsprechende Volumen an Hydraulikfluid verdrängt. Die beiden Kolben können sich dabei in einem gemeinsamen Zylinderraum oder in zwei separaten Zylinderräumen, die fluidisch miteinander verbunden sind, bewegen. Zwei Zylinderräume sind dabei fluidisch miteinander verbunden, wenn ein Fluid bei gewissen Betriebssituationen bzw. Ventilstellungen von einem Zylinderraum in den anderen Zylinderraum strömen kann.

Die Formulierung, dass der Eingangskolben und der Ausgangskolben mittels des Hydraulikfluids hydraulisch miteinander kommunizieren, bringt zum Ausdruck, dass ein Einschieben eines Kolbens in den jeweiligen Zylinderraum dazu führt, dass der andere Kolben entsprechend dem dabei verdrängten Hydraulikflüssigkeitsvolumen aus dem jeweiligen Zylinderraum herausgedrückt wird. Beide Kolben sind auf diese Weise hydraulisch miteinander gekoppelt.

Wird die Antriebseinrichtung derart betätigt, dass sich der Eingangskolben (axial entlang seiner Kolbenachse) gegenüber dem Grundkörper bewegt und dabei weiter in den zugehörigen Zylinderraum eindringt, so wird dadurch ein gewisses Hydraulikfluidvolumen verdrängt. Wegen der hydraulischen Kopplung der beiden Kolben (hydraulisches Kommunizieren) wird dadurch eine dem verdrängten Volumen entsprechende axiale Verschiebung des Ausgangskolbens aus dem zugehörigen Zylinderraum heraus bewirkt. Der Ausgangskolben wirkt auf dem Prüfadapter ein und verschiebt diesen auf diese Weise ebenfalls in axialer Richtung (bezogen auf die Kolbenachse des Ausgangskolbens), sodass ein zwischen der Anschlussaufnahme und dem Prüfadapter angeordneter Anschluss dort verklemmt bzw. verspannt wird.

Gemäß einer ersten bevorzugten Ausführungsform der Erfindung
- weist der Eingangskolben eine Eingangskolbenquerschnittsfläche auf, und
- weist der Ausgangskolben eine Ausgangskolbenquerschnittfläche auf, die größer ist als die Eingangskolbenquerschnittsfläche.

Weist der Eingangskolben also eine kleinere Querschnittsfläche als der Ausgangskolben auf, kann erreicht werden, dass eine auf den Eingangskolben wirkende Betätigungskraft durch den Kraftwandler in eine größere Ausgangskraft gewandelt wird, die über den Ausgangskolben auf den Prüfadapter übertragen werden kann. Ist beispielsweise die Ausgangskolbenquerschnittsfläche 10-mal so groß wie die Eingangskolbenquerschnittsfläche, so ließe sich auf diese Weise die Betätigungskraft in eine 10-mal so große Ausgangskraft wandeln.

Unter einer Kolbenquerschnittsfläche wird vorliegend die Fläche der hydraulikffluidseitigen Stirnseite eines Kolbens verstanden.

Ein besonders einfacher zu fertigender, kompakter und robuster Kraftwandler kann realisiert werden, indem der Eingangskolben und der Ausgangskolben jeweils zumindest teilweise in einen gemeinsamen, mit dem Hydraulikfluid befüllten Zylinderraum hineinragen.

Weiterhin kann in vorteilhafter Weise vorgesehen sein, dass der Ausgangskolben mittels einer Rückstellvorrichtung, die insbesondere als Rückstellfeder ausgeführt ist, rückstellbar ist.

Gemäß einer weiteren besonders vorteilhaften Ausführungsform des erfindungsgemäßen Prüfstands sind der Grundkörper des Schnellspannkopfs und die Anschlussaufnahme an einem Rahmen der Schnellspanneinheit angeordnet.

Auf diese Weise können sich die Anschlussaufnahme und der Schnellspannkopf während des Einspannens des Anschlusses der Leitung an dem Rahmen der Schnellspanneinheit abstützen, um auf dieser Weise die benötigte Klemmkraft auf den Prüfadapter und den Anschluss auszuüben.

Ganz besonders vorteilhaft ist es hierbei, wenn der Grundkörper des Schnellspannkopfs und/oder die Anschlussaufnahme jeweils mittels einer, insbesondere einen Spindelmechanismus umfassenden, Positionierungseinrichtung verschiebbar an dem Rahmen der Schnellspanneinheit angeordnet ist/sind.

Mittels der Positioniereinrichtung kann der Prüfadapter schnell bis auf "Anschlag" an den in der Anschlussaufnahme eingelegten Anschluss der Leitung herangefahren werden, während der hydraulische Kraftwandler anschließend verwendet wird, um die zur dichten Verbindung benötigte hohe Anpresskraft auszuüben.

Eine besonders einfache und gleichermaßen robuste Anschlussaufnahme ist realisierbar, indem die Anschlussaufnahme zwei gegenüberliegende Klauenflanken und eine sich dazwischen erstreckende schlitzförmige Ausnehmung aufweist, in die der Anschluss der zu prüfenden Leitung aufnehmbar ist.

Eine weitere besonders vorteilhafte Ausführungsform der Erfindung zeichnet sich dadurch aus, dass der Prüfadapter
- konisch ausgeführt ist,
- einen in seiner der Anschlussaufnahme zugewandten Stirnfläche mündenden Prüffluidkanal aufweist, und/oder
- lösbar am Ausgangskolben befestigt ist.

Ein konisch ausgeführter Prüfadapter kann aufgrund seiner Form mit Anschlüssen unterschiedlicher Innendurchmesser dicht verbunden werden. Ein und derselbe Prüfadapter kann somit verwendet werden, um verschiedene Leitungstypen mit unterschiedlichen Anschlüssen zu prüfen, wodurch sich Umrüstzeiten minimieren lassen.

Über die in seiner der Anschlussaufnahme zugewandten Stirnfläche mündende Prüfleitung kann eine zu prüfenden Leitung mit einem Prüffluid beaufschlagt werden.

Mit der Formulierung, dass der Prüfadapter lösbar am Ausgangskolben befestigt ist, kommt zum Ausdruck, dass der Prüfadapter einfach ausgetauscht und durch einen anderen Prüfadapter gewechselt werden kann. Da der Prüfadapter typischerweise auf den Typ der zu testenden Leitung abgestimmt werden muss, ist es vorteilhaft, wenn der Prüfadapter schnell und einfach ausgetauscht werden kann, wenn in kurzer Zeit verschiedene Leitungstypen zu prüfen sind.

Erfindungsgemäß ist vorgesehen, dass ein Abschnitt des Eingangskolbens ein Außengewinde und der Grundkörper ein korrespondierendes Innengewinde aufweist, sodass durch Drehen des Eingangskolbens gegenüber dem Grundkörper der Eingangskolben linear verschiebbar ist.

Weiterhin kann vorgesehen sein, dass die Antriebseinrichtung des Eingangskolbens
- eine insbesondere als Griff oder Hebelmechanismus ausgeführte manuell betätigbare Antriebseinrichtung, und/oder
- eine maschinelle Antriebseinrichtung aufweist.

Nachfolgend wird eine Ausführungsform des erfindungsgemäßen Prüfstands anhand der Zeichnungen näher erläutert. Dabei zeigt
- Fig. 1: eine schematische Seitenansicht eines erfindungsgemäßen Prüfstands, und
- Fig. 2: die Schnellspanneinheit des erfindungsgemäßen Prüfstandes in einer vergrößerten, schematischen Schnittansicht.

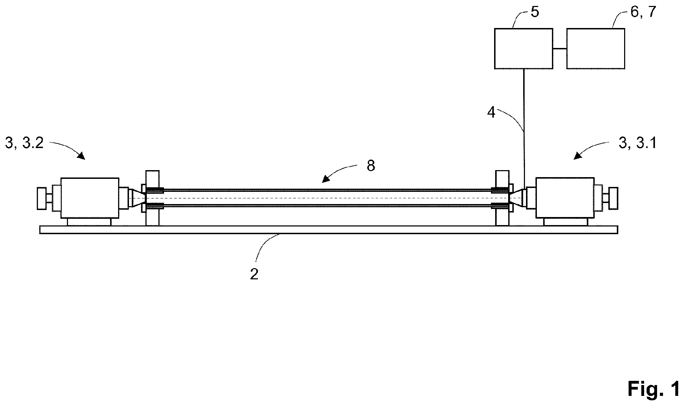

Der in Fig. 1 dargestellte erfindungsgemäße Prüfstand 1 umfasst einen Prüfstandsrahmen 2, zwei Schnellspanneinheiten 3, eine Prüffluidleitung 4, ein Befüll- und Druckerzeugungsaggregat 5 sowie ein Steuergerät 6 mit einer Anzeigeeinheit 7.

Mittels der beiden Schnellspanneinheiten 3 kann eine als Hydraulikleitung ausgeführte Leitung 8 mit einem (Hydraulik)Schlauch 9 und an dessen Enden angebrachten Anschlüssen 10 fluidisch dicht im Prüfstand 1 fixiert werden.

Die Prüffluidleitung 4 verbindet das Befüll- und Druckerzeugungsaggregat 5 mit einer der beiden Schnellspanneinheiten 3, nachfolgend Befüll-Schnellspanneinheit 3.1 genannt. Über die Befüll-Schnellspanneinheit 3.1 kann Prüffluid in die zu prüfende Hydraulikleitung 8 geleitet werden. Die der Befüll-Schnellspanneinheit 3.1 gegenüberliegende Schnellspanneinheit 3, nachfolgend Verschluss-Schnellspanneinheit 3.2 genannt, verschließt die Hydraulikleitung 8 am ihrem gegenüberliegenden Ende.

Das Befüll- und Druckerzeugungsaggregat 5 kann vom Steuergerät 6 derart betätigt werden, dass ein Prüffluid durch die Prüffluidleitung 4 über die Befüll-Schnellspanneinheit 3.1 in die zu prüfenden Hydraulikleitung 8 gefördert wird.

Das Steuergerät 6 weist einer Nutzerschnittstelle auf, über die der Prüfdruck vorgegeben und/oder der Prüfvorgang gestartet werden kann. Über die Anzeigeeinheit 7 kann insbesondere der in der Hydraulikleitung 8 anliegende Druck angezeigt werden.

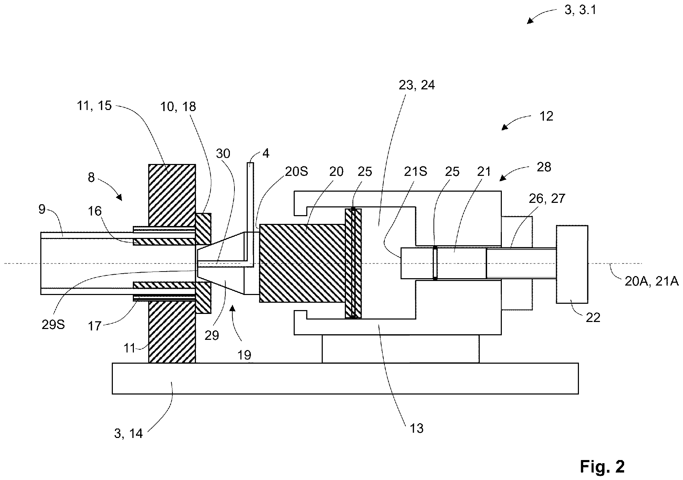

Mit Blick auf Fig. 2 wird nachfolgend der Aufbau der Befüll-Schnellspanneinheit 3, 3.1 näher beleuchtet.

Die Befüll-Schnellspanneinheit 3.1 umfasst eine Anschlussaufnahme 11, einen Schnellspannkopf 12 mit einem Grundkörper 13 und einen Rahmen 14, der ein Teil des Prüfstandsrahmen 2 ist. Die Anschlussaufnahme 11 und der Grundkörper 13 des Schnellspannkopfs 12 sind dabei jeweils auf dem Rahmen 14 fixiert.

Die Anschlussaufnahme 11 weist zwei gegenüberliegenden Klauenflanken 15 auf, zwischen denen sich eine schlitzförmige Ausnehmung erstreckt, in die einer der beiden Anschlüsse 10 der zu prüfenden Hydraulikleitung 8 aufgenommen ist.

Der in Fig. 2 dargestellte Anschluss 10 umfasst einen Anschlussnippel 16 und eine Presshülse 17. Der Anschlussnippel 16 ist bis zu einem Anschlussflansch 18 in den Hydraulikschlauch 9 eingeschoben. Die Presshülse 17 umschließt den Hydraulikschlauch 9 im Bereich des eingeschobenen Anschlussnippels 16 von außen. Die Presshülse 17, der Hydraulikschlauch 9 und der Anschlussnippel 16 wurden mittels einer Radialpresse fluidisch dicht miteinander verpresst.

Der Anschlussflansch 18 des Anschlusses 10 stützt sich an der Anschlussaufnahme 11 ab, sodass der Anschluss 10 nicht weiter in axialer Richtung vom Schnellspannkopf 12 weg (also nach links bezogen auf Fig. 2) verschoben werden kann.

Der Anschlussflansch 18 des Anschlusses 10 ist zwischen der Anschlussaufnahme 11 und dem Schnellspannkopf 12 verspannt (eingeklemmt).

Der Schnellspannkopf 12 umfasst neben dem Grundkörper 13 einen Prüfadapter 19, einen am Prüfadapter 19 befestigten Ausgangskolben 20, einen Eingangskolben 21 und eine am Eingangskolben 21 angreifende, als Griff ausgeführte Antriebseinrichtung 22.

Im Grundkörper 13 ist ein mit einem Hydraulikfluid 23 gefüllter Zylinderraum 24 ausgebildet, in den der Ausgangskolben 20 und der Eingangskolben 21 zumindest teilweise hineinragen. Beide Kolben 20, 21 sind axial entlang ihrer jeweiligen Kolbenachsen 20A, 21A beweglich im Grundkörper 13 geführt und jeweils mittels eines Dichtrings 25 gegenüber dem Grundkörper 13 abgedichtet. Die Kolben 20, 21 können auf diese Weise weiter in den Zylinderraum 24 hinein und aus ihm herausgeschoben werden. Über das im Zylinderraum 24 befindliche Hydraulikfluid 23 kommunizieren der Eingangskolben 20 und der Ausgangskolben 21 hydraulisch miteinander, mit anderen Worten, die beiden Kolben 20, 21 sind hydraulisch miteinander gekoppelt.

Der Eingangskolben 21 erstreckt sich entlang seiner Kolbenachse 21A, ist zylindrisch ausgeführt und weist eine kreisförmige Eingangskolbenquerschnittsfläche 21S auf. Ein Abschnitt des Eingangskolbens 21 weist ein Außengewinde 26 auf, welches mit einem Innengewinde 27 in einem Bereich des Grundkörpers 13 korrespondiert. Durch Drehen des Griffs, also durch Betätigung der Antriebseinrichtung 22, kann der Eingangskolben 21 weiter in den Grundkörper 13 und damit in den Zylinderraum 24 hinein- bzw. aus diesem herausgeschraubt werden. Der Eingangskolben 21 wird dabei axial (entlang seiner Kolbenachse 21A) gegenüber dem Grundkörper 13 bewegt.

Wird der Eingangskolben 21 auf diese Weise weiter in den Zylinderraum 24 hineingeschraubt, bewirkt das dabei verdrängte Hydraulikfluid 23, dass der Ausgangskolben 20 dem verdrängten Volumen entsprechend durch eine Ausgangskraft aus dem Zylinderraum 24 herausgeschoben wird. Der Eingangskolben 21, der Ausgangskolben 20 und die Antriebseinrichtung 22 sind Teil eines hydraulischen Kraftwandlers 28.

Der Ausgangskolben 20 erstreckt sich entlang seiner Kolbenachse 20A, ist zylindrisch ausgeführt und weist eine kreisförmige Ausgangskolbenquerschnittsfläche 20S auf, die größer ist als die Eingangskolbenquerschnittsfläche 21S. Der Ausgangskolben 20 ist mittels einer (nicht dargestellten) als Rückstellfeder ausgeführten Rückstellvorrichtung rückstellbar. Beim Rückstellen wird der Ausgangskolben 20 von der Rückstellfeder wieder weiter in den Zylinderraum 24 hineingeschoben.

Der Prüfadapter 19 ist auswechselbar am Ausgangskolben 20 befestigt und umfasst einen konischen Abschnitt 29, der sich zu einer Stirnfläche 29S verjüngt, die der Anschlussaufnahme 11 zugewandt ist. Durch den Prüfadapter 19 hindurch erstreckt sich ein Prüffluidkanal 30, der einerseits in der Stirnfläche 29S und andererseits in der Prüffluidleitung 4 mündet. Prüffluid kann durch den Prüffluidkanal 30 in die Hydraulikleitung 8 strömen, um diese mit einem Prüfdruck zu beaufschlagen.

Im in Fig. 2 dargestellten eingespannten Zustand ragt der konische Abschnitt 29 des Prüfadapters 19 teilweise in den Anschluss 10 der Hydraulikleitung 8 hinein und wird durch die vom Ausgangskolben 20 auf den Prüfadapter 19 wirkende Ausgangskraft unter Ausbildung einer dichten Verbindung gegen den Anschluss 10 gespannt.

Die Verschluss-Schnellspannvorrichtung 3, 3.2 ist im Wesentlichen genauso aufgebaut wie die in Fig. 2 dargestellte Befüll-Spanneinrichtung 3, 3.1, weist allerdings keinen Prüffluidkanal auf.

**Bezugszeichenliste**

| | |
|---|---|
| Prüfstand | 1 |
| Prüfstandsrahmen | 2 |
| Schnellspanneinheit | 3 |
| Befüll-Schnellspanneinheit | 3.1 |
| Verschluss-Schnellspanneinheit | 3.2 |
| Prüffluidleitung | 4 |
| Befüll- und Druckerzeugungsaggregat | 5 |
| Steuergerät | 6 |
| Anzeigeeinheit | 7 |
| (Hydraulik-)Leitung | 8 |
| (Hydraulik-)Schlauch | 9 |
| Anschluss | 10 |
| Anschlussaufnahme | 11 |
| Schnellspannkopf | 12 |
| Grundkörper | 13 |
| Rahmen | 14 |
| Klauenflanke | 15 |
| Anschlussnippel | 16 |
| Presshülse | 17 |
| Anschlussflansch | 18 |
| Prüfadapter | 19 |
| Ausgangskolben | 20 |
| Kolbenachse des Ausgangskolbens | 20A |
| Ausgangskolbenquerschnittsfläche | 20S |
| Eingangskolben | 21 |
| Kolbenachse des Eingangskolbens | 21A |
| Eingangskolbenquerschnittsfläche | 21S |
| Antriebseinrichtung | 22 |
| Hydraulikfluid | 23 |
| Zylinderraum | 24 |
| Dichtring | 25 |
| Außengewinde | 26 |
| Innengewinde | 27 |
| hydraulischer Kraftwandler | 28 |
| konischen Abschnitt | 29 |
| Stirnfläche | 29S |
| Prüffluidkanal | 30 |

## Patentansprüche

1. Prüfstand (1) mit einer Schnellspanneinheit (3) zur Druckprüfung einer Leitung (8), insbesondere einer Hydraulikleitung,
wobei
- die Schnellspanneinheit (3) eine Anschlussaufnahme (11) und einen Schnellspannkopf (12) umfasst, zwischen denen ein Anschluss (10) der zu prüfenden Leitung (8) einspannbar ist,
- der Schnellspannkopf (12) einen Grundkörper (13), einen gegenüber dem Grundkörper (13) bewegbaren Prüfadapter (19) und einen hydraulischen Kraftwandler (28) aufweist,
- der hydraulische Kraftwandler (28) eine Antriebseinrichtung (22), einen Eingangskolben (21) und einen auf den Prüfadapter (19) einwirkenden Ausgangskolben (20) umfasst,
- der Eingangskolben (21) und der Ausgangskolben (20) jeweils axial beweglich entlang ihrer Kolbenachse (20A, 21A) im Grundkörper (13) geführt sind und mittels eines Hydraulikfluids (23) hydraulisch miteinander kommunizieren,
- sich durch Betätigung der Antriebseinrichtung (22) der Eingangskolben (21) axial gegenüber dem Grundkörper (13) bewegt, was mittels des Hydraulikfluids (23) eine axiale Bewegung des Ausgangskolbens (20) sowie des Prüfadapters (19) bewirkt, und
- ein Abschnitt des Eingangskolbens (21) ein Außengewinde (26) und der Grundkörper (13) ein korrespondierendes Innengewinde (27) aufweist, sodass durch Drehen des Eingangskolbens (21) gegenüber dem Grundkörper (13) der Eingangskolben (21) linear verschiebbar ist.

2. Prüfstand (1) nach Anspruch 1, wobei
- der Eingangskolben (21) eine Eingangskolbenquerschnittsfläche (21S) aufweist, und
- der Ausgangskolben (20) eine Ausgangskolbenquerschnittfläche (20S) aufweist, die größer ist als die Eingangskolbenquerschnittsfläche (21S).

3. Prüfstand (1) nach einem der voranstehenden Ansprüche, wobei der Eingangskolben (21) und der Ausgangskolben (20) jeweils zumindest teilweise in einen gemeinsamen, mit dem Hydraulikfluid (23) befüllten Zylinderraum (24) hineinragen.

4. Prüfstand (1) nach einem der voranstehenden Ansprüche, wobei der Ausgangskolben (20) mittels einer Rückstellvorrichtung, die insbesondere als Rückstellfeder ausgeführt ist, rückstellbar ist.

5. Prüfstand (1) nach einem der voranstehenden Ansprüche, wobei der Grundkörper (13) des Schnellspannkopfs (12) und die Anschlussaufnahme (11) an einem Rahmen (14) der Schnellspanneinheit (3) angeordnet sind.

6. Prüfstand (1) nach Anspruch 5, wobei der Grundkörper (13) des Schnellspannkopfs (12) und/oder die Anschlussaufnahme (11) jeweils mittels einer, insbesondere einen Spindelmechanismus umfassenden, Positionierungseinrichtung verschiebbar an dem Rahmen (14) der Schnellspanneinheit (3) angeordnet ist/sind.

7. Prüfstand (1) nach einem der voranstehenden Ansprüche, wobei die Anschlussaufnahme (11) zwei gegenüberliegende Klauenflanken (15) und eine sich dazwischen erstreckende schlitzförmige Ausnehmung aufweist, in die der Anschluss (10) der zu prüfenden Leitung (8) aufnehmbar ist.

8. Prüfstand (1) nach einem der voranstehenden Ansprüche, wobei der Prüfadapter (19)
- konisch ausgeführt ist,
- einen in seiner der Anschlussaufnahme (11) zugewandten Stirnfläche (29S) mündenden Prüffluidkanal (30) aufweist, und/oder
- lösbar am Ausgangskolben (20) befestigt ist.

9. Prüfstand (1) nach einem der voranstehenden Ansprüche, wobei die Antriebseinrichtung (22) des Eingangskolbens (21)
- eine insbesondere als Griff oder Hebelmechanismus ausgeführte manuell betätigbare Antriebseinrichtung (22), und/oder
- eine maschinelle Antriebseinrichtung aufweist.
